# EUROPÄISCHE PATENTSCHRIFT

(11) **EP 4 313 466 B1**
(45) Veröffentlichungstag und Bekanntmachung des Hinweises auf die Patenterteilung: **05.03.2025**
(21) Anmeldenummer: 21717790.6
(22) Anmeldetag: 01.04.2021
(51) Int. Cl.: B23K 11/06, B23K 11/30

(54) **VERFAHREN ZUR BEFESTIGUNG EINES ROLLENKOPFES AN EINEM SCHWEISSARM FÜR EINE WIDERSTANDSNAHTSCHWEISSMASCHINE**
METHOD OF FASTENING A ROLLER HEAD TO A WELDING ARM FOR A RESISTANCE WELDING MACHINE
PROCEDE DE FIXATION D'UNE TETE DE ROULEAU A UN BRAS DE SOUDAGE POUR UNE MACHINE DE SOUDAGE PAR RESISTANCE

(43) Veröffentlichungstag der Anmeldung: 07.02.2024
(73) Patentinhaber: Soudronic AG, 8962 Bergdietikon (CH)
(72) Erfinder: GAUCH, Pascal, 8964 Rudolfstetten (CH); ROTH, Matthias, 8154 Oberglatt (CH); STÄUBLI, Daniel, 5430 Wettingen (CH)
(74) Vertreter: E. Blum & Co. AG
(86) Internationale Anmeldenummer: PCT/EP2021/058745
(87) Internationale Veröffentlichungsnummer: WO 2022/207120

(56) Entgegenhaltungen:
- EP-A1- 0 714 723
- CH-A5- 688 680
- DE-A1- 2 747 222
- DE-A1- 3 432 499

## Beschreibung

### Technisches Gebiet

Die Erfindung betrifft ein Verfahren zur Befestigung eines Rollenkopfes an einem Schweissarm für eine Widerstandsnahtschweissmaschine, eine Anordnung umfassend einen Schweissarm für eine Widerstandsnahtschweissmaschine und einen daran befestigten Rollenkopf, eine Widerstandsnahtschweissmaschine mit einer solchen Anordnung, einen Rollenkopf für eine solche Anordnung sowie die Verwendung der Anordnung zum Widerstandsnahtschweissen der Längsnaht von Dosenzargen gemäss den Oberbegriffen der unabhängigen Ansprüche.

### Stand der Technik

Aus den Dokumenten DE 40 20 182 C1 und WO 2013/181765 A1 sind flüssigkeitsgekühlte Rollenköpfe für Schweissarme für Widerstandsnahtschweissmaschinen bekannt. Aus den Dokumenten DE 34 32 499 A1 (Basis für den Oberbegriff der Ansprüche 1 und 11), DE 27 47 222 A1 und EP 0 714 723 A1 sind Widerstandsnahtschweissmaschinen mit einem Schweissarm mit daran befestigtem Rollenkopf bekannt, und das Dokument CH 688 689 A5 hat eine Z-Schiene für eine derartige Widerstandsnahtschweissmaschine zum Gegenstand.

Die Rollenköpfe umfassen einen Stator und eine Elektrodenrolle, welche als Rotor an dem Stator rotierbar um eine Rotationsachse gelagert ist. Der Stator steht beidseits der Elektrodenrolle in Richtung der Rotationsachse mit Befestigungsfortsätzen über die Elektrodenrolle über. Die Elektrodenrollen der Rollenköpfe verschleissen im bestimmungsgemässen Gebrauch an ihrem Umfang, und werden zur Verlängerung ihrer Lebensdauer ein paarmal nachbearbeitet, bis die Verschleissgrenze erreicht ist. Dies geschieht im ausgebauten Zustand. Entsprechend müssen die Rollenköpfe relativ häufig gewechselt werden. Die Befestigungsfortsätze, welche als kreiszylindrische Achsstümpfe ausgebildet sind, dienen der Befestigung des Rollenkopfes am Schweissarm, der Übertragung des Schweissstromes vom Schweissarm auf den Rollenkopf sowie dem Zu- und Abführen von Kühlflüssigkeit zur Kühlung des Rollenkopfes. Für den letztgenannten Zweck weisen die Befestigungsfortsätze radiale Zu- und Abführungsbohrungen auf, welche bei der Montage auf zugeordneten Zu- und Abführungsbohrungen im Schweissarm ausgerichtet werden müssen. Abgesehen davon, dass es bei der Ausrichtung der Zu- und Abführungsbohrungen zu Montagefehlern kommen kann, gibt es bei der heute bekannten Rollenköpfen auch immer wieder Probleme mit Undichtigkeiten im Bereich der Zu- und Abführungsbohrungen sowie Kontaktprobleme, was zu teuren Maschinen-Stillstandzeiten für die Fehlerbehebung führen kann.

### Darstellung der Erfindung

Es stellt sich daher die Aufgabe eine technische Lösung zur Verfügung zu stellen, mit welcher sich die Nachteile des Standes der Technik auf kostengünstige Weise ganz oder zumindest teilweise vermeiden lassen.

Diese Aufgabe wird durch die Gegenstände der unabhängigen Patentansprüche gelöst.

Gemäss diesen betrifft ein erster Aspekt der Erfindung ein Verfahren zur Befestigung eines Rollenkopfes an einem Schweissarm für eine Widerstandsnahtschweissmaschine. Der Rollenkopf umfasst einen Stator und eine Elektrodenrolle, welche als Rotor an dem Stator rotierbar um eine Rotationsachse gelagert ist. Der Stator steht beidseits der Elektrodenrolle in Richtung der Rotationsachse mit Befestigungsfortsätzen über die Elektrodenrolle über.

Das Verfahren umfasst die Schritte:
a) Bereitstellen eines Schweissarms für eine Widerstandsnahtschweissmaschine, welcher im bestimmungsgemässen Betriebszustand eine Aufnahmeöffnung für den Rollenkopf aufweist, welche zwischen zwei sich gegenüberliegenden, bevorzugterweise parallelen Begrenzungswänden gebildet ist, die ihrerseits Befestigungsaufnahmeöffnungen für die Befestigungsfortsätze des Stators des Rollenkopfes aufweisen;
b) Anordnen des Rollenkopfes in der Aufnahmeöffnung für den Rollenkopf derart, dass die Elektrodenrolle mit einem Teil ihrer Umfangsbegrenzung aus der Aufnahmeöffnung heraussteht und die Befestigungsfortsätze in den Befestigungsaufnahmeöffnungen angeordnet sind; und
c) Befestigen des Rollenkopfes an dem Schweissarm durch Anpressen der Befestigungsfortsätze des Stators jeweils mit einer daran gebildeten ebenen Kontaktfläche an eine zugeordnete ebene Kontaktfläche innerhalb der Begrenzungen der jeweiligen Befestigungsaufnahmeöffnung,

wobei die Kontaktflächen der Befestigungsfortsätze des Stators und die zugeordneten Kontaktflächen über Zu- und Abführöffnungen für ein Kühlmedium verfügen und die Befestigungsfortsätze des Stators derartig in den Befestigungsaufnahmeöffnungen für die Befestigungsfortsätze angeordnet und befestigt werden, dass sich die Zu- bzw. Abführöffnungen jeweils zumindest teilweise überschneiden,
und wobei die Befestigungsfortsätze des Stators jeweils mit einem in der jeweiligen Befestigungsaufnahmeöffnung aufgenommenen Klemmstück mit ihren Kontaktflächen gegen die zugehörigen Kontaktflächen gepresst werden.

Es hat sich gezeigt, dass durch die Erfindung Montagefehler vermieden werden können und eine gute und zuverlässige Abdichtung und Stromübertragung erreicht werden kann.

In einer ersten Ausführungsalternative wird dabei die zugeordnete Kontaktfläche jeweils von einer in der jeweiligen Befestigungsaufnahmeöffnung angeordneten Adapteranordnung bereitgestellt, welche ihrerseits mit einer daran gebildeten Kontaktfläche an eine zugeordnete, von den Begrenzungen der jeweiligen Befestigungsaufnahmeöffnung gebildete Kontaktfläche angepresst wird. Derartige Lösungen kommen vor allem als Nachrüstlösungen für bestehende Schweissarme gemäss dem Stand der Technik in Betracht.

In einer zweiten bevorzugten Ausführungsalternative wird die zugeordnete Kontaktfläche jeweils von den Begrenzungen der jeweiligen Befestigungsaufnahmeöffnung bereitgestellt, und nicht wie bei der ersten Ausführungsalternative, von einem zwischen diesen Begrenzungen und der Kontaktfläche des jeweiligen Befestigungsfortsatzes angeordnetem zusätzlichen Bauteil. Hierdurch wird eine direkte Stromübertragung vom Schweissarm auf die Befestigungsfortsätze des Rollenkopfes möglich und die Befestigungsaufnahmeöffnungen können kleiner ausgestaltet werden, was eine stabilere Ausführung des Schweissarms ermöglicht. Auch wird es möglich, den Rollenkopf mit sehr wenigen, einfach zu fertigenden Teilen am Schweissarm zu befestigen, was kostengünstige Lösungen begünstigt und dabei auch wenig Know-How und Zeit für den Austausch der Rollenköpfe erfordert.

Bevorzugterweise verlaufen dabei die Kontaktflächen an den Befestigungsfortsätzen des Stators und die zugehörigen Kontaktflächen der Begrenzungen der Befestigungsaufnahmeöffnungen am Schweissarm in Ebenen, welche parallel zur Rotationsachse der Elektrodenrolle verlaufen, mit Vorteil senkrecht zu der Längsachse des Schweissarms. Auf diese Weise können grosse positionstolerante Kontaktflächen zwischen den Befestigungsfortsätzen des Stators und den Begrenzungen der Befestigungsaufnahmeöffnungen am Schweissarm gebildet werden, und der Stator des Rollenkopfes weist im montierten Zustand gegenüber den Kontaktflächen der Begrenzungen der Befestigungsaufnahmeöffnungen am Schweissarm eine genau definierte rotatorische Position auf.

Die Klemmstücke werden mit Vorteil für eine Verschiebbarkeit in Klemmrichtung durch die Begrenzungen der Befestigungsaufnahmeöffnungen geführt. Dies wird bevorzugterweise dadurch bewerkstelligt, dass die Klemmstücke zwecks Führung für eine Verschiebbarkeit in Klemmrichtung mit ebenen, in Anpressrichtung verlaufenden Führungsflächen an zugeordnete Führungsflächen der Begrenzungen der Befestigungsaufnahmeöffnungen angrenzen.

Auf diese Weise lassen sich die Befestigungsfortsätze des Stators zuverlässig und auf kontrollierte Weise an die Kontaktflächen der Begrenzungen der Befestigungsaufnahmeöffnungen des Schweissarms anpressen.

Dabei ist es bevorzugt, dass die Befestigungsfortsätze des Stators und die Befestigungsaufnahmeöffnungen am Schweissarm derartig ausgebildet sind, dass die Befestigungsfortsätze mit ihren Kontaktflächen in verschiedenen Positionen, bevorzugterweise in verschiedenen Positionen quer zur Rotationsachse der Elektrodenrolle und senkrecht zur Längsachse des Schweissarms, an die Kontaktflächen der Begrenzungen der Befestigungsaufnahmeöffnungen angepresst werden können. Hierdurch wird es möglich, die Rotationsachse der Elektrodenrolle quer zur Längsachse des Schweissarms zu verschieben und auch bei unterschiedlichen Elektrodenrollendurchmessern und feststehendem Schweissarm zu erreichen, dass die Elektrodenrolle mit ihrer Umfangsbegrenzung immer um ein bestimmtes Mass aus der Aufnahmeöffnung heraussteht und damit auf die so genannte "Z-Schiene" bzw. die Schweissebene ausgerichtet werden kann.

Mit Vorteil werden dabei die Positionen der Befestigungsfortätze mit den Klemmstücken festgelegt, indem diese beim Anpressen der Befestigungsfortsätze sowohl einen Formschluss mit den Begrenzungen der jeweiligen Befestigungsaufnahmeöffnung in einer parallel zu der Ebene der Kontaktflächen verlaufenden Richtung senkrecht zu der Rotationsachse der Elektrodenrolle herstellen als auch einen Formschluss mit dem jeweiligen Befestigungsfortsatz in dieser Richtung. Auf diese Weise lassen sich die Positionen für bestimmte Elektrodenrollendurchmesser mit zugeordneten Klemmstücken ohne aufwendige Einstellarbeiten formschlüssig und damit sicher festlegen.

Die Klemmstücke werden bevorzugterweise mittels in dem Schweissarm befestigter Spannschrauben gegen die Befestigungsfortsätze des Stators gepresst, zum Anpressen der Befestigungsfortsätze mit den daran gebildeten Kontaktflächen an die zugeordneten Kontaktflächen. Auf diese Weise verbleiben sämtliche für das Anpressen verwendeten Kräfte innerhalb des Schweissarms und es können grosse Anpresskräfte einfach und präzise bereitgestellt werden.

In noch einer weiteren bevorzugten Ausführungsform des erfindungsgemässen Verfahrens wird eine der beiden sich gegenüberliegenden Begrenzungswände der Aufnahmeöffnung für den Rollenkopf, welche die Befestigungsaufnahmeöffnungen für die Befestigungsfortsätze des Stators des Rollenkopfes bilden, von einem Bauteil gebildet, welches, bevorzugterweise in Richtung der Rotationsachse der Elektrodenrolle wegzeigend, von einem Hauptkörper des Schweissarms vorübergehend entfernt werden kann, welcher Hauptkörper die andere der beiden sich gegenüberliegenden Begrenzungswände der Aufnahmeöffnung für den Rollenkopf bildet. Dieses Bauteil wird zum Anordnen des Rollenkopfes in der Aufnahmeöffnung vorübergehend entfernt, so dass die Aufnahmeöffnung vorübergehend zu einer Seite offen ist, und nach dem Einsetzen des Rollenkopfes in den Hauptkörper derart, dass einer der Befestigungsfortsätze des Stators des Rollenkopfes in der Befestigungsaufnahmeöffnung angeordnet ist, die von der Seitenwand des Hauptkörpers gebildet wird, wieder installiert, derart, dass der andere Befestigungsfortsatz des Stators in der Befestigungsaufnahmeöffnung angeordnet ist, welche von der Seitenwand dieses Bauteils gebildet wird.

Hierdurch ist es möglich, den Rollenkopf auf einfache, selbsterklärende Weise und in kurzer Zeit zu Wechseln.

Ein zweiter Aspekt der Erfindung betrifft eine Anordnung umfassend einen Schweissarm für eine Widerstandsnahtschweissmaschine und einen daran befestigten Rollenkopf. Der Rollenkopf weist einen Stator und eine Elektrodenrolle auf, welche als Rotor an dem Stator rotierbar um eine Rotationsachse gelagert ist. Dabei steht der Stator beidseits der Elektrodenrolle in Richtung der Rotationsachse mit Befestigungsfortsätzen über die Elektrodenrolle über.

Der Schweissarm weist eine Aufnahmeöffnung für den Rollenkopf auf, welche zwischen zwei sich gegenüberliegenden, bevorzugterweise parallelen Begrenzungswänden gebildet ist. Diese Begrenzungswände weisen ihrerseits Befestigungsaufnahmeöffnungen für die Befestigungsfortsätze des Stators des Rollenkopfes auf.

Dabei ist der Rollenkopf derart in der Aufnahmeöffnung angeordnet, dass die Elektrodenrolle mit einem Teil ihrer Umfangsbegrenzung aus der Aufnahmeöffnung heraussteht und die Befestigungsfortsätze in den Befestigungsaufnahmeöffnungen angeordnet sind. Er ist durch Anpressen der Befestigungsfortsätze des Stators jeweils mit einer daran gebildeten ebenen Kontaktfläche an eine zugeordnete ebene Kontaktfläche innerhalb der Begrenzungen der jeweiligen Befestigungsaufnahmeöffnung an dem Schweissarm befestigt.

Die Kontaktflächen der Befestigungsfortsätze des Stators und die zugeordneten Kontaktflächen verfügen über Zu- und Abführöffnungen für ein Kühlmedium und die Befestigungsfortsätze des Stators sind derartig in den Befestigungsaufnahmeöffnungen angeordnet und befestigt, dass sich die Zu- bzw. Abführöffnungen jeweils zumindest teilweise überschneiden.

Die Befestigungsfortsätze des Stators sind dabei jeweils mit einem in der jeweiligen Befestigungsaufnahmeöffnung aufgenommenen Klemmstück mit ihren Kontaktflächen gegen die zugehörigen Kontaktflächen angepresst.

Es hat sich gezeigt, dass durch die erfindungsgemässe Ausgestaltung Montagefehler vermieden werden können und eine gute und zuverlässige Abdichtung und Stromübertragung erreicht werden kann.

In einer ersten Ausführungsalternative ist dabei die zugeordnete Kontaktfläche jeweils von einer in der jeweiligen Befestigungsaufnahmeöffnung angeordneten Adapteranordnung bereitgestellt, welche ihrerseits mit einer daran gebildeten Kontaktfläche an eine zugeordnete von den Begrenzungen der jeweiligen Befestigungsaufnahmeöffnung gebildete Kontaktfläche angepresst ist. Derartige Lösungen kommen vor allem als Nachrüstlösungen für bestehende Schweissarme in Betracht.

In einer zweiten bevorzugten Ausführungsalternative ist die zugeordnete Kontaktfläche jeweils von den Begrenzungen der jeweiligen Befestigungsaufnahmeöffnung bereitgestellt, und nicht wie bei der ersten Ausführungsalternative von einem zwischen diesen Begrenzungen und der Kontaktfläche des jeweiligen Befestigungsfortsatzes angeordneten zusätzlichen Bauteil. Hierdurch wird eine direkte Stromübertragung vom Schweissarm auf die Befestigungsfortsätze des Rollenkopfes möglich, und die Befestigungsaufnahmeöffnungen können kleiner ausgestaltet werden, was eine stabilere Ausführung des Schweissarms ermöglicht. Auch wird es möglich, den Rollenkopf mit sehr wenigen, einfach zu fertigenden Teilen am Schweissarm zu befestigen, was kostengünstige Lösungen begünstigt und nur wenig Know-How und Zeit für den Austausch der Rollenköpfe erfordert.

Die Kontaktflächen an den Befestigungsfortsätzen des Stators und die zugehörigen Kontaktflächen der Begrenzungen der Befestigungsaufnahmeöffnungen verlaufen mit Vorteil in Ebenen, welche parallel zur Rotationsachse der Elektrodenrolle verlaufen, bevorzugterweise senkrecht zu einer Längsachse des Schweissarms. Auf diese Weise können grosse positionstolerante Kontaktflächen zwischen den Befestigungsfortsätzen des Stators und den Begrenzungen der Befestigungsaufnahmeöffnungen am Schweissarm gebildet werden, und der Stator des Rollenkopfes weist gegenüber den Kontaktflächen der Begrenzungen der Befestigungsaufnahmeöffnungen am Schweissarm eine genau definierte rotatorische Position auf.

Die Befestigungsaufnahmeöffnungen an dem Schweissarm sind mit Vorteil umfangsmässig geschlossen. Auf diese Weise wird eine unnötige strukturelle Schwächung des Schweissarmes verhindert.

Die Klemmstücke sind mit Vorteil für eine Verschiebbarkeit in Klemmrichtung durch die Begrenzungen der Befestigungsaufnahmeöffnungen geführt.

Dies ist bevorzugterweise dadurch realisiert, dass die Klemmstücke zwecks Führung für eine Verschiebbarkeit in Klemmrichtung mit ebenen, in Anpressrichtung verlaufenden Führungsflächen an zugeordnete Führungsflächen der Begrenzungen der Befestigungsaufnahmeöffnungen angrenzen.

Auch ist es dabei bevorzugt, dass die Klemmstücke die Befestigungsfortsätze des Stators jeweils von der der Kontaktfläche gegenüberliegenden Seite her umgreifen.

Durch die zuvor genannten Massnahmen ist es möglich, die Befestigungsfortsätze des Stators zuverlässig und auf kontrollierte Weise an die Kontaktflächen der Begrenzungen der Befestigungsaufnahmeöffnungen des Schweissarms anzupressen.

Dabei ist es bevorzugt, dass die Befestigungsfortsätze des Stators und die Befestigungsaufnahmeöffnungen am Schweissarm derartig ausgebildet sind, dass die Befestigungsfortsätze mit ihren Kontaktflächen in verschiedenen Positionen, bevorzugterweise in verschiedenen Positionen quer zur Rotationsachse der Elektrodenrolle und senkrecht zur Längsachse des Schweissarms, an die Kontaktflächen der Begrenzungen der Befestigungsaufnahmeöffnungen angepresst werden können. Hierdurch wird es möglich, die Rotationsachse der Elektrodenrolle quer zur Längsachse des Schweissarms zu verschieben und auch bei unterschiedlichen Elektrodenrollendurchmessern und feststehendem Schweissarm zu erreichen, dass die Elektrodenrolle mit ihrer Umfangsbegrenzung immer um ein bestimmtes Mass aus der Aufnahmeöffnung heraussteht und damit auf die "Z-Schiene" bzw. die Schweissebene ausgerichtet werden kann.

Mit Vorteil sind dabei die Positionen mit den Klemmstücken festgelegt, indem diese beim Anpressen der Befestigungsfortsätze sowohl einen Formschluss mit den Begrenzungen der jeweiligen Befestigungsaufnahmeöffnung in einer parallel zu der Ebene der Kontaktflächen und senkrecht zu der Rotationsachse der Elektrodenrolle verlaufenden Richtung herstellen als auch einen Formschluss mit dem jeweiligen Befestigungsfortsatz in dieser Richtung. Auf diese Weise lassen sich die Positionen für bestimmte Elektrodenrollendurchmesser mit zugeordneten Klemmstücken ohne aufwendige Einstellarbeiten formschlüssig und damit sicher festlegen.

Dabei ist es bei Ausführungsformen der Anordnung, bei denen die Klemmstücke die Befestigungsfortsätze des Stators jeweils von der der Kontaktfläche gegenüberliegenden Seite her umgreifen, bevorzugt, dass die Rotationsachse der Elektrodenrolle unterschiedliche Abstände zu den Ebenen aufweist, in denen die ebenen, in Anpressrichtung verlaufenden Führungsflächen der Klemmstücke verlaufen.

Sind die Klemmstücke dabei derartig ausgebildet, dass sie in zwei verschiedenen Positionen eingebaut werden können, zur wahlweisen Positionierung der Kontaktflächen der Befestigungsfortsätze des Stators in zwei verschiedenen Positionen an den Kontaktflächen der Begrenzungen der Befestigungsaufnahmeöffnungen, was bevorzugt ist, so wird es möglich, das Klemmstück zwei verschiedenen Elektrodenrollendurchmessern zuzuordnen und so die Anzahl der Klemmstück-Dimensionen, welche für eine bestimmte Anzahl verschiedener Elektrodenrollendurchmesser benötigt wird, zu halbieren.

In einer weiteren bevorzugten Ausführungsform der erfindungsgemässen Anordnung weisen die Befestigungsfortsätze des Stators in Richtung der Rotationsachse der Elektrodenrolle gesehen jeweils einen kreisrunden Querschnitt mit einer Abplattung auf, welche die Kontaktfläche bildet. Derartige Konturen sind einfach und kostengünstig zu fertigen und ermöglichen eine genau definierte rotatorische Ausrichtung des Stators der Rollenanordnung gegenüber dem Schweissarm.

Die Klemmstücke sind bevorzugterweise mittels in dem Schweissarm befestigter Spannschrauben gegen die Befestigungsfortsätze des Stators gepresst, zum Anpressen der Befestigungsfortsätze mit den daran gebildeten Kontaktflächen an die zugeordneten Kontaktflächen der Begrenzungen der Befestigungsaufnahmeöffnungen. Auf diese Weise verbleiben sämtliche für das Anpressen benötigten Kräfte innerhalb des Schweissarms und es können grosse Anpresskräfte einfach und präzise bereitgestellt werden.

Dabei ist es bevorzugt, dass in den Kontaktflächen der Befestigungsaufnahmeöffnungen Dichtungen angeordnete sind, zur Abdichtung der sich zumindest teilweise überschneidenden Zu- bzw. Abführöffnungen nach aussen hin. Durch diese Ausgestaltung kann eine Schwächung der Befestigungsfortsätze des Rollenkopfstators durch Ausnehmungen für die Dichtungsaufnahme vermieden werden.

In noch einer weiteren bevorzugten Ausführungsform der erfindungsgemässen Anordnung ist eine der beiden sich gegenüberliegenden Begrenzungswände der Aufnahmeöffnung für den Rollenkopf, welche Begrenzungswände die Befestigungsaufnahmeöffnungen für die Befestigungsfortsätze des Stators des Rollenkopfes bereitstellen, von einem Bauteil gebildet, welches zwecks Montage oder Austausch des Rollenkopfes von einem Hauptkörper des Schweissarms, welcher die andere der beiden sich gegenüberliegenden Begrenzungswände der Aufnahmeöffnung für den Rollenkopf bildet, vorübergehend entfernt werden kann. Hierdurch ist es möglich, den Rollenkopf auf einfache, selbsterklärende Weise und in kurzer Zeit zu Wechseln.

Ein dritter Aspekt der Erfindung betrifft eine Widerstandsnahtschweissmaschine mit einer Anordnung gemäss dem zweiten Aspekt der Erfindung.

Ein vierter Aspekt der Erfindung betrifft einen Rollenkopf für eine Anordnung gemäss dem zweiten Aspekt der Erfindung oder für eine Widerstandsnahtschweissmaschine gemäss dem dritten Aspekt der Erfindung, umfassend einen Stator und eine Elektrodenrolle, welche als Rotor an dem Stator rotierbar um eine Rotationsachse gelagert ist, wobei der Stator beidseits der Elektrodenrolle in Richtung der Rotationsachse mit Befestigungsfortsätzen über die Elektrodenrolle übersteht. Die Befestigungsfortsätze des Stators weisen ebene Kontaktflächen auf, zum Befestigen des Rollenkopfes durch Anpressen an zugeordnete Kontaktflächen eines Schweissarms für eine Widerstandsnahtschweissmaschine. Diese Kontaktflächen verlaufen in Ebenen, welche parallel zur Rotationsachse der Elektrodenrolle verlaufen. Durch diese Ausgestaltung kann erreicht werden, dass der Stator des Rollenkopfes bei seiner Montage am Schweissarm eine definierte rotatorische Ausrichtung gegenüber dem Schweissarm einnimmt.

Dies ist besonders dann von Vorteil, wenn die Kontaktflächen der Befestigungsfortsätze des Stators über Zu- und Abführöffnungen für ein Kühlmedium verfügen, was bevorzugt ist, zum Zu- und Abführen von einem Kühlmedium zur Elektrodenrolle und von dieser weg. Diese Zu- und Abführöffnungen müssen bei der Montage auf zugeordnete Zu- und Abführöffnungen am Schweissarm ausgerichtet werden, was bei dieser Ausführungsform des erfindungsgemässen Rollenkopfes bei entsprechender Ausgestaltung des Schweissarmes automatisch erfolgen kann und damit helfen kann, Montagefehler zu vermeiden.

In einer bevorzugten Ausführungsform des Rollenkopfes weisen die Befestigungsfortsätze des Stators in Richtung der Rotationsachse der Elektrodenrolle gesehen jeweils einen kreisrunden Querschnitt mit einer Abplattung auf, welche die anspruchsgemässe Kontaktfläche bildet.

Ein fünfter Aspekt der Erfindung betrifft die Verwendung der Anordnung gemäss dem zweiten Aspekt der Erfindung zum Widerstandsnahtschweissen der Längsnaht von Dosenzargen.

### Kurze Darstellung der Zeichnungen

Im Folgenden werden der heutige Stand der Technik und die Erfindung anhand der Zeichnungen näher erläutert. Dabei zeigen:
Fig. 1 eine perspektivische Darstellung eines Schweissarms für eine Widerstandsnahtschweissmaschine mit einem daran befestigten Rollenkopf gemäss dem Stand der Technik;
Fig. 2 eine Seitenansicht des Schweissarms aus Fig. 1;
Fig. 3 einen Vertikalschnitt durch den Schweissarm aus Fig.1 entlang der Linie A-A in Fig. **1****;**
Fig. 4 eine perspektivische Darstellung eines ersten Schweissarms für eine Widerstandsnahtschweissmaschine mit einem daran befestigten Rollenkopf gemäss der Erfindung;
Fig. 5 eine Draufsicht von oben auf den Schweissarm aus Fig. 4;
Fig. 6 eine Seitenansicht des Schweissarms aus Fig. 4;
Fig. 7 einen Schnitt durch den Schweissarm aus Fig.4 entlang der Linie B-B in Fig. 5;
Fig. 8 eine perspektivische Darstellung eines zweiten Schweissarms für eine Widerstandsnahtschweissmaschine mit einem daran befestigten Rollenkopf gemäss der Erfindung;
Fig. 9 eine Seitenansicht des Schweissarms aus Fig. 8; und
Fig. 10 einen Schnitt durch den Schweissarm aus Fig.8 entlang der Linie C-C in Fig. 8.

### Wege zur Ausführung der Erfindung

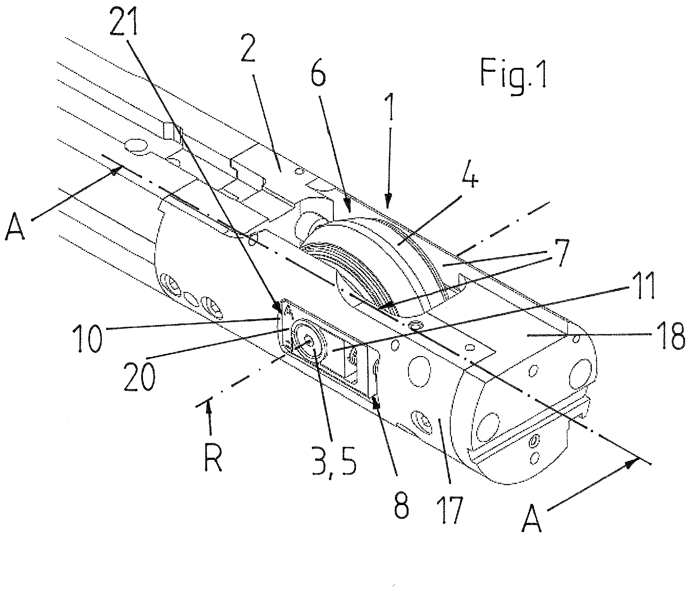

Figur 1 zeigt einen Schweissarm für eine Widerstandsnahtschweissmaschine mit einem daran befestigten Rollenkopf wie er aus dem Stand der Technik bekannt ist in einer perspektivischen Darstellung.

Rollenköpfe für Widerstandsnahtschweissmaschinen sind dem Fachmann bekannt, z.B. aus den eingangs erwähnten Dokumenten DE 40 20 182 C1 und WO 2013/181765 A1, und müssen deshalb hier nicht im Detail beschrieben werden.

Derartige Rollenköpfe 1 umfassen einen Stator 3 und eine Elektrodenrolle 4, welche als Rotor an dem Stator 3 rotierbar um eine Rotationsachse R gelagert ist. Der Stator 3 steht beidseits der Elektrodenrolle 4 in Richtung der Rotationsachse R mit Befestigungsfortsätzen 5 über die Elektrodenrolle 4 über.

Wie zu erkennen ist, weist der Schweissarm 2 eine Aufnahmeöffnung 6 für den Rollenkopf 1 auf, welche zwischen zwei sich gegenüberliegenden parallelen Begrenzungswänden 7 gebildet ist.

Die Begrenzungswände 7 weisen jeweils umfangsmässig geschlossene Befestigungsaufnahmeöffnungen 8 für die Befestigungsfortsätze 5 des Stators 3 des Rollenkopfes 1 auf.

Der Rollenkopf 1 ist derart in der Aufnahmeöffnung 6 des Schweissarms 2 angeordnet, dass die Elektrodenrolle 4 mit einem Teil ihrer Umfangsbegrenzung aus der Aufnahmeöffnung 6 heraussteht und die Befestigungsfortsätze 5 in den Befestigungsaufnahmeöffnungen 8 angeordnet sind.

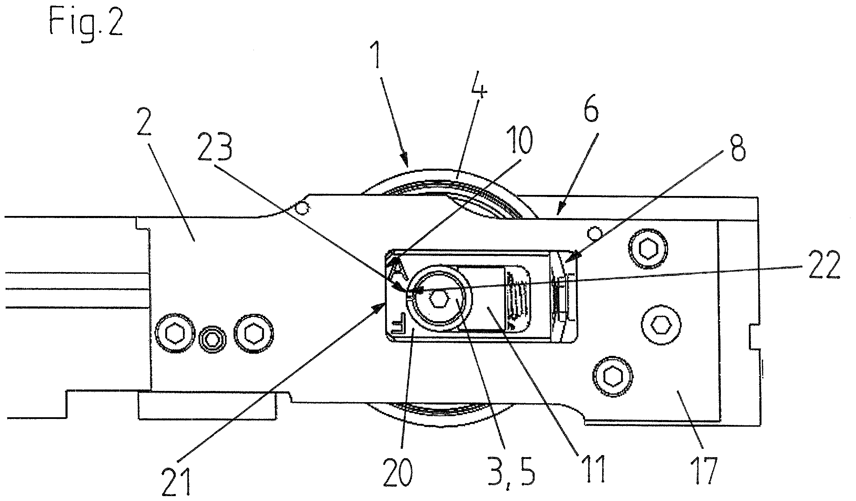

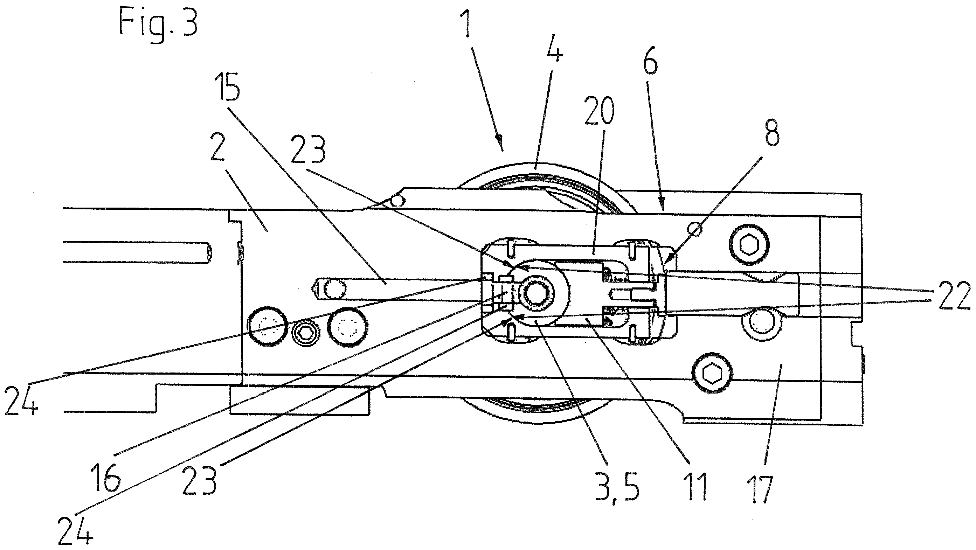

Wie aus einer Zusammenschau mit den Figuren 2 und 3 hervorgeht, welche eine Seitenansicht des Schweissarms aus Fig. 1 zeigen (Fig.2) sowie einen Vertikalschnitt durch den Schweissarm aus Fig.1 entlang der Linie A-A in Fig. 1 (Fig. 3), sind die Befestigungsfortsätze 5 des Stators 3 als zylindrische Achsstümpfe mit einem kreisrunden Querschnitt ausgebildet und der Rollenkopf 1 ist durch Anpressen dieser Achsstümpfe 5 jeweils mit einer daran gebildeten gewölbten Kontaktfläche 23 an eine zugeordnete gewölbte Kontaktfläche 22 innerhalb der Begrenzungen der jeweiligen Befestigungsaufnahmeöffnung 8 an dem Schweissarm 2 befestigt.

Die zugeordnete gewölbte Kontaktfläche 22 wird dabei jeweils von einer in der jeweiligen Befestigungsaufnahmeöffnung 8 angeordneten Adapteranordnung 20 bereitgestellt, welche ihrerseits mit einer daran gebildeten Kontaktfläche 21 an eine zugeordnete von den Begrenzungen der jeweiligen Befestigungsaufnahmeöffnung 8 gebildete Kontaktfläche 10 angepresst ist.

Dabei werden die Befestigungsfortsätze 5 des Stators 3 jeweils mit einem in der jeweiligen Befestigungsaufnahmeöffnung 8 aufgenommenen Klemmstück 11 mit ihren Kontaktflächen 23 gegen die zugehörigen Kontaktflächen 22 angepresst. Die Klemmstücke 11 umgreifen die Befestigungsfortsätze 5 des Stators 3 jeweils von der der Kontaktfläche 23 gegenüberliegenden Seite her.

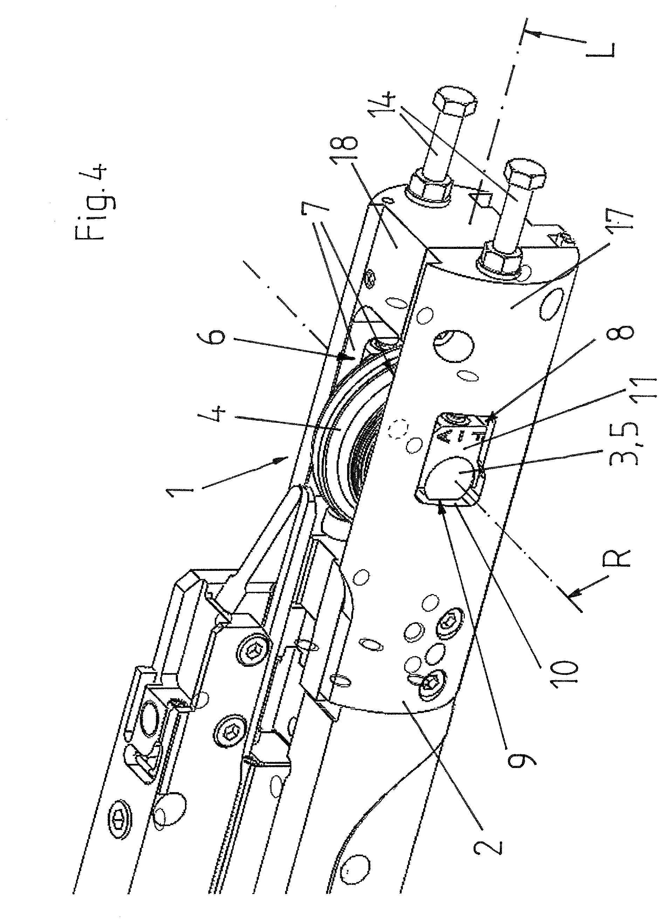

Fig. 4 zeigt eine erste erfindungsgemässe Anordnung in Form eines ersten erfindungsgemässen Schweissarms für eine Widerstandsnahtschweissmaschine mit einem daran befestigten erfindungsgemässen Rollenkopf in einer perspektivischen Darstellung.

Wie zu erkennen ist, weist auch hier der Schweissarm 2 eine Aufnahmeöffnung 6 für den Rollenkopf 1 auf, welche zwischen zwei sich gegenüberliegenden parallelen Begrenzungswänden 7 gebildet ist.

Auch hier umfasst der Rollenkopf 1 einen Stator 3 und eine Elektrodenrolle 4, welche als Rotor an dem Stator 3 rotierbar um eine Rotationsachse R gelagert ist. Der Stator 3 steht beidseits der Elektrodenrolle 4 in Richtung der Rotationsachse R mit Befestigungsfortsätzen 5 über die Elektrodenrolle 4 über.

Die Begrenzungswände 7 weisen ebenfalls jeweils umfangsmässig geschlossene Befestigungsaufnahmeöffnungen 8 für die Befestigungsfortsätze 5 des Stators 3 des Rollenkopfes 1 auf und der Rollenkopf 1 ist ebenfalls derart in der Aufnahmeöffnung 6 des Schweissarms 2 angeordnet, dass die Elektrodenrolle 4 mit einem Teil ihrer Umfangsbegrenzung aus der Aufnahmeöffnung 6 heraussteht und die Befestigungsfortsätze 5 in den Befestigungsaufnahmeöffnungen 8 angeordnet sind.

Eine der beiden sich gegenüberliegenden Begrenzungswände 7 der Aufnahmeöffnung 6 für den Rollenkopf 1, welche eine der Befestigungsaufnahmeöffnungen 8 für die Befestigungsfortsätze 5 des Stators 3 des Rollenkopfes 1 bilden, ist von einem Bauteil 17 gebildet, welches zwecks Montage oder Austausch des Rollenkopfes 1 von einem Hauptkörper 18 des Schweissarms 2, welcher die andere der beiden sich gegenüberliegenden Begrenzungswände 7 der Aufnahmeöffnung 6 für den Rollenkopf 1 bildet, vorübergehend entfernt werden kann.

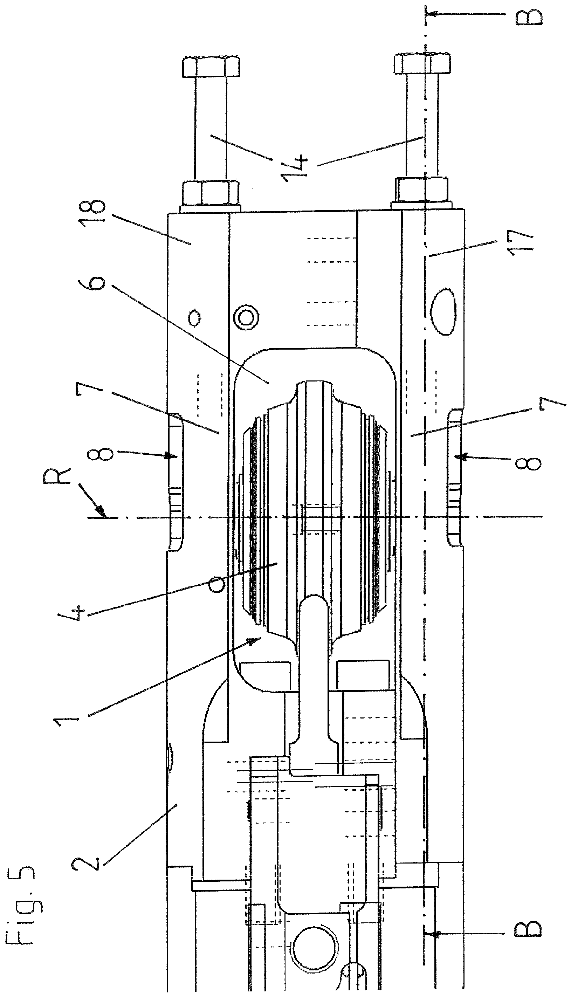

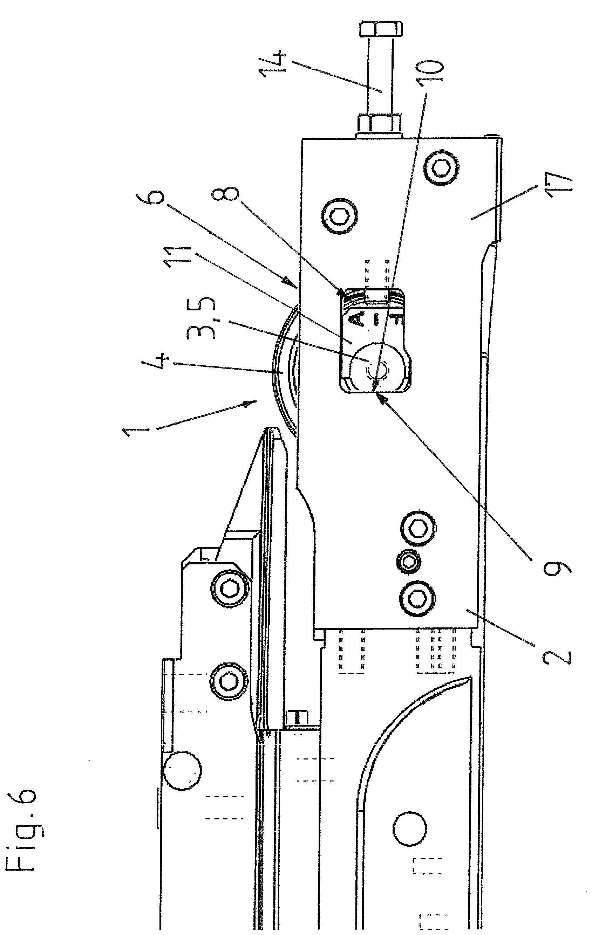

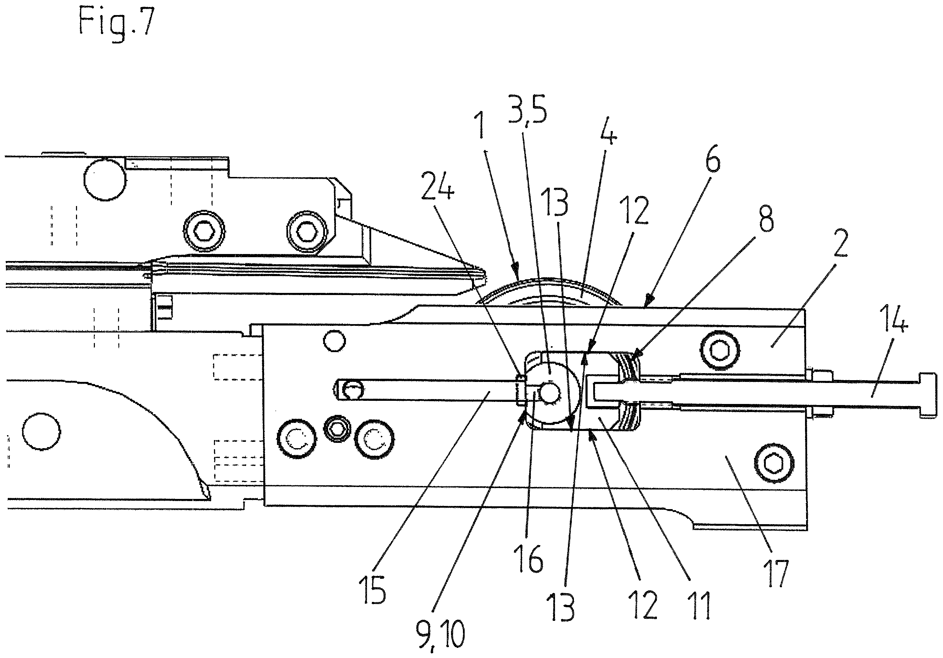

Wie aus einer Zusammenschau mit den Figuren 5 bis 7 hervorgeht, welche eine Draufsicht von oben auf den Schweissarm aus Fig. 4 (Fig.5), eine Seitenansicht des Schweissarms aus Fig. 4 (Fig.6) sowie einen Schnitt durch den Schweissarm aus Fig.4 entlang der Linie B-B in Fig. 5 (Fig. 7) zeigen, weisen die Befestigungsfortsätze 5 des Stators 3 bei dieser erfindungsgemässen Ausführungsform in Richtung der Rotationsachse R der Elektrodenrolle 4 gesehen jeweils einen kreisrunden Querschnitt mit einer Abplattung auf, welche die Kontaktfläche 9 des jeweiligen Befestigungsfortsatzes 5 bildet.

Die zugeordneten Kontaktflächen 10 werden bei dieser Ausführungsform von den Begrenzungen der jeweiligen Befestigungsaufnahmeöffnung 8 gebildet.

Dabei verlaufen die Kontaktflächen 9 an den Befestigungsfortsätzen 5 des Stators 3 und die zugehörigen Kontaktflächen 10 an den Begrenzungen der jeweiligen Befestigungsaufnahmeöffnung 8 in Ebenen, welche parallel zur Rotationsachse R der Elektrodenrolle 4 und senkrecht zu der Längsachse L des Schweissarms 2 verlaufen.

Die Befestigungsfortsätze 5 des Stators 3 werden auch hier jeweils mit einem in der jeweiligen Befestigungsaufnahmeöffnung 8 aufgenommenen Klemmstück 11 mit ihren Kontaktflächen 9 gegen die zugehörigen Kontaktflächen 10 angepresst. Auch hier umgreifen die Klemmstücke 11 die Befestigungsfortsätze 5 des Stators 3 jeweils von der der Kontaktfläche 9 gegenüberliegenden Seite her.

Jedoch sind hier die Klemmstücke 11 für eine Verschiebbarkeit in Klemmrichtung durch die Begrenzungen der Befestigungsaufnahmeöffnungen 8 geführt, indem sie zwecks Führung für eine Verschiebbarkeit in Klemmrichtung mit ebenen, in Anpressrichtung verlaufenden Führungsflächen 12 direkt an zugeordnete Führungsflächen 13 der Begrenzungen der Befestigungsaufnahmeöffnungen 8 angrenzen.

Die Befestigungsfortsätze 5 des Stators 3 und die Befestigungsaufnahmeöffnungen 8 sind hier derartig ausgebildet, dass die Befestigungsfortsätze 5 mit ihren Kontaktflächen 9 in verschiedenen Positionen an die Kontaktflächen 10 der Begrenzungen der Befestigungsaufnahmeöffnungen 8 angepresst werden können.

Dabei sind die Positionen mit den Klemmstücken 11 festgelegt, indem diese beim Anpressen der Befestigungsfortsätze 5 sowohl einen Formschluss mit den Begrenzungen der jeweiligen Befestigungsaufnahmeöffnung 8 in einer Richtung parallel zu der Ebene der Kontaktflächen 9 und 10 und auch senkrecht zu der Rotationsachse R der Elektrodenrolle 4 herstellen als auch einen Formschluss mit dem jeweiligen Befestigungsfortsatz 5 in einer Richtung parallel zu der Ebene der Kontaktflächen 9 und 10 und auch senkrecht zu der Rotationsachse R der Elektrodenrolle 4.

Wie zu erkennen ist, sind die Klemmstücke 11 derartig ausgebildet, dass die Rotationsachse R der Elektrodenrolle 4 unterschiedliche Abstände zu den Ebenen aufweist, in denen die ebenen, in Anpressrichtung verlaufenden Führungsflächen 12 der Klemmstücke 11 verlaufen.

Auch sind die Klemmstücke 11 derartig ausgebildet, dass sie in zwei verschiedenen Positionen eingebaut werden können, zur wahlweisen Positionierung der Kontaktflächen 9 der Befestigungsfortsätze 5 des Stators 3 in zwei verschiedenen Positionen an den Kontaktflächen 10 der Begrenzungen der Befestigungsaufnahmeöffnungen 8.

Die Klemmstücke 11 werden mittels in dem Schweissarm 2 befestigter Spannschrauben 14 gegen die Befestigungsfortsätze 5 des Stators 3 gepresst, zum Anpressen der daran gebildeten Kontaktflächen 9 an die zugeordneten Kontaktflächen 10 der Begrenzungen der Befestigungsaufnahmeöffnungen 8.

Wie aus Fig. 7 hervorgeht, welche einen Vertikalschnitt entlang der Linie B-B in Fig. 5 zeigt, verfügen die Kontaktflächen 9 der Befestigungsfortsätze 5 des Stators 3 und die zugeordneten Kontaktflächen 10 der Begrenzungen der Befestigungsaufnahmeöffnungen 8 über Zu- und Abführöffnungen 15, 16 für ein Kühlmedium für den Rollenkopf 1. Dabei sind die Befestigungsfortsätze 5 des Stators 3 derartig in den Befestigungsaufnahmeöffnungen 8 angeordnet und befestigt, dass sich die Zu- bzw. Abführöffnungen 15, 16 in jeder möglichen Position überschneiden.

Wie ebenfalls zu erkennen ist, sind in den Kontaktflächen 10 der Befestigungsaufnahmeöffnungen 8 Dichtungen 24 angeordnet, zur Abdichtung der sich überschneidenden Zu- bzw. Abführöffnungen 15, 16 nach aussen hin.

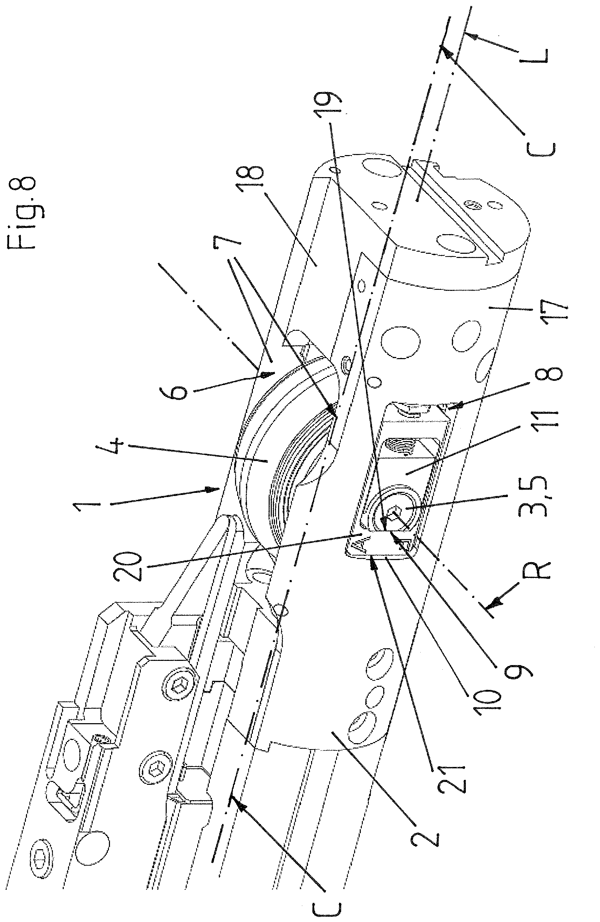

Fig. 8 zeigt eine zweite erfindungsgemässe Anordnung in Form eines Schweissarms für eine Widerstandsnahtschweissmaschine mit einem daran befestigten erfindungsgemässen Rollenkopf in einer perspektivischen Darstellung. Diese Ausführungsform der Erfindung stellt eine Nachrüstlösung für bestehende Schweissarme gemäss dem Stand der Technik dar.

Diese Anordnung weist vom Basiskonzept her den Aufbau der anhand der Figuren 1 bis 3 beschriebenen Anordnung gemäss dem Stand der Technik auf.

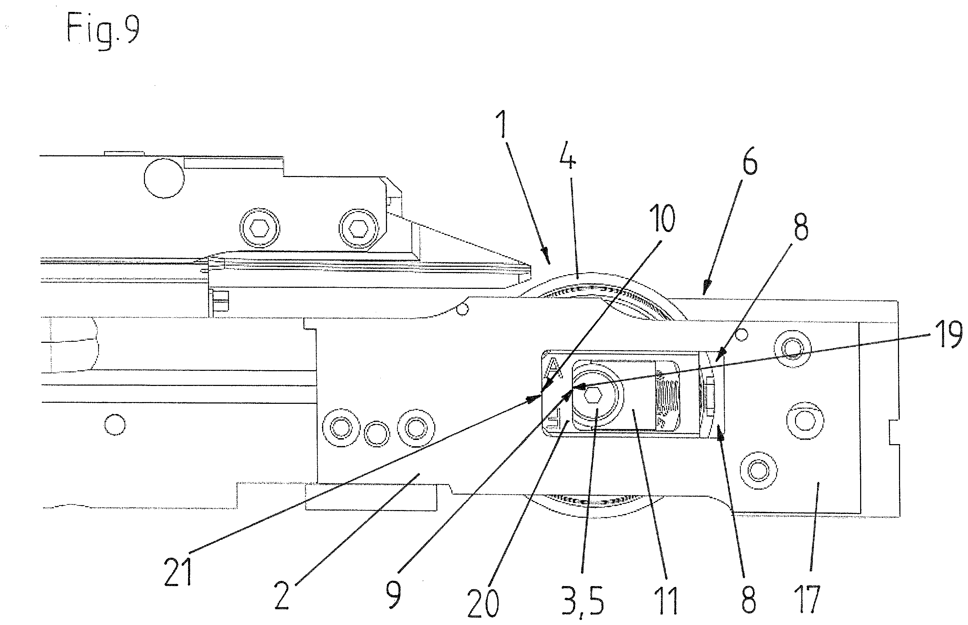

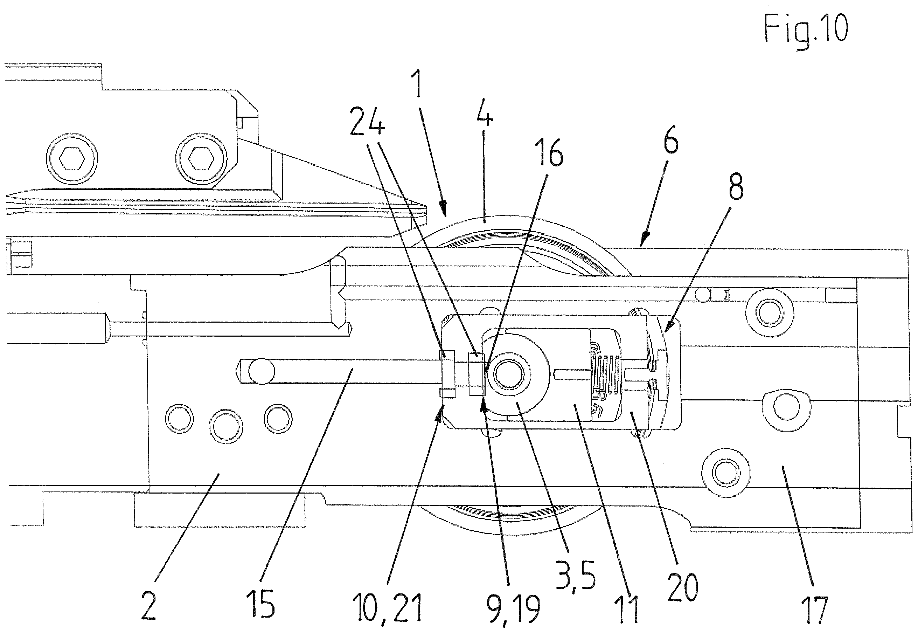

Wie in Zusammenschau der Fig. 8 mit den Figuren 9 und 10 erkennbar ist, welche eine Seitenansicht des Schweissarms aus Fig. 8 zeigen (Fig. 9) sowie einen Schnitt durch den Schweissarm aus Fig.8 entlang der Linie C-C in Fig. 8 (Fig. 10) zeigen, weisen die Befestigungsfortsätze 5 des Stators 3 jedoch bei dieser zweiten erfindungsgemässen Ausführungsform in Richtung der Rotationsachse R der Elektrodenrolle 4 gesehen jeweils einen kreisrunden Querschnitt mit einer ebenen Abplattung auf, welche die Kontaktfläche 9 des jeweiligen Befestigungsfortsatzes 5 bildet.

Die zugeordneten ebenen Kontaktflächen 19 werden bei dieser Ausführungsform jeweils von einer in der jeweiligen Befestigungsaufnahmeöffnung 8 angeordneten Adapteranordnung 20 bereitgestellt, welche ihrerseits mit einer daran gebildeten Kontaktfläche 21 an eine zugeordnete von den Begrenzungen der jeweiligen Befestigungsaufnahmeöffnung 8 gebildete Kontaktfläche 10 angepresst ist.

Die Befestigungsfortsätze 5 des Stators 3 werden auch hier jeweils mit einem in der jeweiligen Befestigungsaufnahmeöffnung 8 aufgenommenen Klemmstück 11 mit ihren Kontaktflächen 9 gegen die zugehörigen Kontaktflächen 19 angepresst. Die Klemmstücke 11 umgreifen die Befestigungsfortsätze 5 des Stators 3 jeweils von der der Kontaktfläche 9 gegenüberliegenden Seite her.

Dabei verlaufen die Kontaktflächen 9 an den Befestigungsfortsätzen 5 des Stators 3 und die zugehörigen Kontaktflächen 19 an den Adapteranordnungen 20 in Ebenen, welche parallel zur Rotationsachse R der Elektrodenrolle 4 und senkrecht zu der Längsachse L des Schweissarms 2 verlaufen.

Die Befestigungsfortsätze 5 des Stators 3 und die Adapteranordnungen 20 sind hier derartig ausgebildet, dass die Befestigungsfortsätze 5 mit ihren Kontaktflächen 9 in verschiedenen Positionen an die Kontaktflächen 19 der Adapteranordnungen 20 angepresst werden können.

Dabei sind die Positionen mit den Klemmstücken 11 festgelegt, indem diese beim Anpressen der Befestigungsfortsätze 5 sowohl einen Formschluss mit den Adapteranordnungen 20 in einer Richtung parallel zu der Ebene der Kontaktflächen 9 und 19 und auch senkrecht zu der Rotationsachse R der Elektrodenrolle 4 herstellen als auch einen Formschluss mit dem jeweiligen Befestigungsfortsatz 5 in einer Richtung parallel zu der Ebene der Kontaktflächen 9 und 19 und auch senkrecht zu der Rotationsachse R der Elektrodenrolle 4.

Wie aus Fig. 10 hervorgeht, welche einen Vertikalschnitt entlang der Linie C-C in Fig. 8 zeigt, verfügen die Kontaktflächen 9 der Befestigungsfortsätze 5 des Stators 3 und die zugeordneten Kontaktflächen 19 der Adapteranordnungen 20 wie auch die Kontaktflächen 21 der Adapteranordnungen 20 und die zugeordneten Kontaktflächen 10 der Begrenzungen der Befestigungsaufnahmeöffnungen 8 über Zu- und Abführöffnungen 15, 16 für ein Kühlmedium für den Rollenkopf 1. Dabei sind die Befestigungsfortsätze 5 des Stators 3 und die Adapteranordnungen 20 derartig in den Befestigungsaufnahmeöffnungen 8 angeordnet und befestigt, dass sich die Zu- bzw. Abführöffnungen 15, 16 überschneiden.

Wie ebenfalls zu erkennen ist, sind in den Kontaktflächen 19 der Adapteranordnung 20 und in den Kontaktflächen 10 der Befestigungsaufnahmeöffnungen 8 Dichtungen 24 angeordnet, zur Abdichtung der sich überschneidenden Zu- bzw. Abführöffnungen 15, 16 nach aussen hin.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zur Befestigung eines Rollenkopfes (1) an einem Schweissarm (2) für eine Widerstandsnahtschweissmaschine, wobei der Rollenkopf (1) einen Stator (3) und eine Elektrodenrolle (4) aufweist, welche als Rotor an dem Stator(3) rotierbar um eine Rotationsachse (R) gelagert ist, und wobei der Stator (3) beidseits der Elektrodenrolle (4) in Richtung der Rotationsachse (R) mit Befestigungsfortsätzen (5) über die Elektrodenrolle (4) übersteht, umfassend die Schritte:
a) Bereitstellen eines Schweissarms (2) für eine Widerstandsnahtschweissmaschine umfassend eine Aufnahmeöffnung (6) für den Rollenkopf (1), welche zwischen zwei sich gegenüberliegenden, insbesondere parallelen Begrenzungswänden (7) gebildet ist, welche ihrerseits Befestigungsaufnahmeöffnungen (8) für die Befestigungsfortsätze (5) des Stators (3) des Rollenkopfes (1) aufweisen;
b) Anordnen des Rollenkopfes (1) in der Aufnahmeöffnung (6) für den Rollenkopf derart, dass die Elektrodenrolle (4) mit einem Teil ihrer Umfangsbegrenzung aus der Aufnahmeöffnung (6) heraussteht und die Befestigungsfortsätze (5) in den Befestigungsaufnahmeöffnungen (8) angeordnet sind; **gekennzeichnet, durch**
c) Befestigen des Rollenkopfes (1) an dem Schweissarm (2) durch Anpressen der Befestigungsfortsätze (5) des Stators (3) jeweils mit einer daran gebildeten ebenen Kontaktfläche (9) an eine zugeordnete ebene Kontaktfläche (10, 19) innerhalb der Begrenzungen der jeweiligen Befestigungsaufnahmeöffnung (8),
wobei die Kontaktflächen (9) der Befestigungsfortsätze (5) des Stators (3) und die zugeordneten Kontaktflächen (10) über Zu- und Abführöffnungen (15, 16) für ein Kühlmedium verfügen und die Befestigungsfortsätze (5) des Stators (3) derartig in den Befestigungsaufnahmeöffnungen (8) für die Befestigungsfortsätze (5) angeordnet und befestigt werden, dass sich die Zu- bzw. Abführöffnungen (15, 16) jeweils zumindest teilweise überschneiden,
und wobei die Befestigungsfortsätze (5) des Stators (3) jeweils mit einem in der jeweiligen Befestigungsaufnahmeöffnung (8) aufgenommenen Klemmstück (11) mit ihren Kontaktflächen (9) gegen die zugehörigen Kontaktflächen (10, 19) gepresst werden.

2. Verfahren nach Anspruch 1, wobei die zugeordnete Kontaktfläche (19) jeweils von einer in der jeweiligen Befestigungsaufnahmeöffnung (8) angeordneten Adapteranordnung (20, 21) bereitgestellt wird, welche ihrerseits mit einer daran gebildeten Kontaktfläche (19) an eine zugeordnete von den Begrenzungen der jeweiligen Befestigungsaufnahmeöffnung (8) gebildete Kontaktfläche (10) angepresst wird.

3. Verfahren nach Anspruch 1, wobei die zugeordnete Kontaktfläche (10) jeweils von den Begrenzungen der jeweiligen Befestigungsaufnahmeöffnung (8) bereitgestellt wird.

4. Verfahren nach Anspruch 3, wobei die Kontaktflächen (9) an den Befestigungsfortsätzen (5) des Stators (3) und die zugehörigen Kontaktflächen (10, 19) in Ebenen verlaufen, welche parallel zur Rotationsachse (R) der Elektrodenrolle (4) verlaufen, und insbesondere senkrecht zu einer Längsachse (L) des Schweissarms (2).

5. Verfahren nach einem der Ansprüche 3 bis 4, wobei die Klemmstücke (11) für eine Verschiebbarkeit in Klemmrichtung durch die Begrenzungen der Befestigungsaufnahmeöffnungen (8) geführt werden.

6. Verfahren nach Anspruch 5, wobei die Klemmstücke (11) zwecks Führung für eine Verschiebbarkeit in Klemmrichtung mit ebenen, in Anpressrichtung verlaufenden Führungsflächen (12) an zugeordnete Führungsflächen (13) der Begrenzungen der Befestigungsaufnahmeöffnungen (8) angrenzen.

7. Verfahren nach einem der Ansprüche 3 bis 6, wobei die Befestigungsfortsätze (5) des Stators (3) und die Befestigungsaufnahmeöffnungen (8) derartig ausgebildet sind, dass die Befestigungsfortsätze (5) mit ihren Kontaktflächen (9) in verschiedenen Positionen an die Kontaktflächen (10) der Begrenzungen der Befestigungsaufnahmeöffnungen (8) angepresst werden können.

8. Verfahren nach Anspruch 7, wobei die Positionen mit den Klemmstücken (11) festgelegt werden, indem diese beim Anpressen der Befestigungsfortsätze (5) sowohl einen Formschluss mit den Begrenzungen der jeweiligen Befestigungsaufnahmeöffnung (8) in einer Richtung parallel zu der Ebene der Kontaktflächen (9, 10) und senkrecht zu der Rotationsachse (R) der Elektrodenrolle (4) herstellen als auch einen Formschluss mit dem jeweiligen Befestigungsfortsatz (5) in einer Richtung parallel zu der Ebene der Kontaktflächen (9, 10) und senkrecht zu der Rotationsachse (R) der Elektrodenrolle (4).

9. Verfahren nach einem der Ansprüche 3 bis 8, wobei die Klemmstücke (11) mittels in dem Schweissarm (2) befestigter Spannschrauben (14) gegen die Befestigungsfortsätze (5) des Stators (3) gepresst werden, zum Anpressen der Befestigungsfortsätze (5) mit den daran gebildeten Kontaktflächen (9) an die zugeordneten Kontaktflächen (10, 19).

10. Verfahren nach einem der vorangehenden Ansprüche, wobei eine der beiden sich gegenüberliegenden Begrenzungswände (7) der Aufnahmeöffnung (6) für den Rollenkopf (1), welche Begrenzungswände (7) die Befestigungsaufnahmeöffnungen (8) für die Befestigungsfortsätze (5) des Stators (3) des Rollenkopfes (1) bilden, von einem Bauteil (17) gebildet wird, welches, insbesondere in Richtung der Rotationsachse (R) der Elektrodenrolle (4) wegzeigend, von einem Hauptkörper (18) des Schweissarms (2), welcher die andere der beiden sich gegenüberliegenden Begrenzungswände (7) der Aufnahmeöffnung (6) für den Rollenkopf (1) bildet, vorübergehend entfernt werden kann,
und wobei dieses Bauteil (17) zum Anordnen des Rollenkopfes (1) in der Aufnahmeöffnung (6) vorübergehend entfernt wird und nach dem Einsetzen des Rollenkopfes (1) in den Hauptkörper (18) derart, dass einer der Befestigungsfortsätze (5) des Stators (3) des Rollenkopfes (1) in der Befestigungsaufnahmeöffnung (8) angeordnet ist, die von der Seitenwand (7) des Hauptkörpers (18) gebildet wird, wieder installiert wird, derart, dass der andere Befestigungsfortsatz (5) des Stators (3) in der Befestigungsaufnahmeöffnung (8) angeordnet ist, die von der Seitenwand (7) des Bauteils (17) gebildet wird.

11. Anordnung umfassend einen Schweissarm (2) für eine Widerstandsnahtschweissmaschine und einen daran befestigten Rollenkopf (1),
wobei der Rollenkopf (1) einen Stator (3) und eine Elektrodenrolle (4) aufweist, welche als Rotor an dem Stator (3) rotierbar um eine Rotationsachse (R) gelagert ist, und wobei der Stator (3) beidseits der Elektrodenrolle (4) in Richtung der Rotationsachse (R) mit Befestigungsfortsätzen (5) über die Elektrodenrolle (4) übersteht,
wobei der Schweissarm (2) eine Aufnahmeöffnung (6) für den Rollenkopf (1) aufweist, welche zwischen zwei sich gegenüberliegenden, insbesondere parallelen Begrenzungswänden (7) gebildet ist, welche ihrerseits Befestigungsaufnahmeöffnungen (8) für die Befestigungsfortsätze (5) des Stators (3) des Rollenkopfes (1) aufweisen,
wobei der Rollenkopf (1) in der Aufnahmeöffnung (6) angeordnet ist derart, dass die Elektrodenrolle (4) mit einem Teil ihrer Umfangsbegrenzung aus der Aufnahmeöffnung (6) heraussteht und die Befestigungsfortsätze (5) in den Befestigungsaufnahmeöffnungen (8) angeordnet sind,
**gekennzeichnet dadurch, dass**
der Rollenkopf (1) durch Anpressen der Befestigungsfortsätze (5) des Stators (3) jeweils mit einer daran gebildeten ebenen Kontaktfläche (9) an eine zugeordnete ebene Kontaktfläche (10, 19) innerhalb der Begrenzungen der jeweiligen Befestigungsaufnahmeöffnung (8) an dem Schweissarm (2) befestigt ist,
wobei die Kontaktflächen (9) der Befestigungsfortsätze (5) des Stators (3) und die zugeordneten Kontaktflächen (10) über Zu- und Abführöffnungen (15, 16) für ein Kühlmedium verfügen und die Befestigungsfortsätze (5) des Stators (3) derartig in den Befestigungsaufnahmeöffnungen (8) angeordnet und befestigt sind, dass sich die Zu- bzw. Abführöffnungen (15, 16) jeweils zumindest teilweise überschneiden,
und wobei die Befestigungsfortsätze (5) des Stators (3) jeweils mit einem in der jeweiligen Befestigungsaufnahmeöffnung (8) aufgenommenen Klemmstück (11) mit ihren Kontaktflächen (9) gegen die zugehörigen Kontaktflächen (10, 19) gepresst sind.

12. Anordnung nach Anspruch 11, wobei die zugeordnete Kontaktfläche (19) jeweils von einer in der jeweiligen Befestigungsaufnahmeöffnung (8) angeordneten Adapteranordnung (20) bereitgestellt ist, welche ihrerseits mit einer daran gebildeten Kontaktfläche (21) an eine zugeordnete von den Begrenzungen der jeweiligen Befestigungsaufnahmeöffnung (8) gebildete Kontaktfläche (10) angepresst ist.

13. Anordnung nach Anspruch 11, wobei die zugeordnete Kontaktfläche (10) jeweils von den Begrenzungen der jeweiligen Befestigungsaufnahmeöffnung (8) bereitgestellt ist.

14. Anordnung nach Anspruch 13, wobei die Kontaktflächen (9) an den Befestigungsfortsätzen (5) des Stators (3) und die zugehörigen Kontaktflächen (10, 19) in Ebenen verlaufen, welche parallel zur Rotationsachse (R) der Elektrodenrolle (4) verlaufen, und insbesondere senkrecht zu einer Längsachse (L) des Schweissarms (2).

15. Anordnung nach einem der Ansprüche 13 bis 14, wobei die Befestigungsaufnahmeöffnungen (8) umfangsmässig geschlossen sind.

16. Anordnung nach Anspruch 15, wobei die Klemmstücke (11) für eine Verschiebbarkeit in Klemmrichtung durch die Begrenzungen der Befestigungsaufnahmeöffnungen (8) geführt sind.

17. Anordnung nach Anspruch 16, wobei die Klemmstücke (11) zwecks Führung für eine Verschiebbarkeit in Klemmrichtung mit ebenen, in Anpressrichtung verlaufenden Führungsflächen (12) an zugeordnete Führungsflächen (13) der Begrenzungen der Befestigungsaufnahmeöffnungen (8) angrenzen.

18. Anordnung nach einem der Ansprüche 13 bis 17, wobei die Klemmstücke (11) die Befestigungsfortsätze (5) des Stators (3) jeweils von der der Kontaktfläche (9) gegenüberliegenden Seite her umgreifen.

19. Anordnung nach einem der Ansprüche 13 bis 18, wobei die Befestigungsfortsätze (5) des Stators (3) und die Befestigungsaufnahmeöffnungen (8) derartig ausgebildet sind, dass die Befestigungsfortsätze (5) mit ihren Kontaktflächen (9) in verschiedenen Positionen an die Kontaktflächen (10) der Begrenzungen der Befestigungsaufnahmeöffnungen (8) angepresst werden können.

20. Anordnung nach Anspruch 19, wobei die Positionen mit den Klemmstücken (11) festgelegt sind, indem diese beim Anpressen der Befestigungsfortsätze (5) sowohl einen Formschluss mit den Begrenzungen der jeweiligen Befestigungsaufnahmeöffnung (8) in einer Richtung parallel zu der Ebene der Kontaktflächen (9, 10) und senkrecht zu der Rotationsachse (R) der Elektrodenrolle (4) herstellen als auch einen Formschluss mit dem jeweiligen Befestigungsfortsatz (5) in einer Richtung parallel zu der Ebene der Kontaktflächen (9, 10) und senkrecht zu der Rotationsachse (R) der Elektrodenrolle (4).

21. Anordnung nach Anspruch 18 und nach Anspruch 20, wobei die Rotationsachse (R) der Elektrodenrolle (4) unterschiedliche Abstände zu den Ebenen aufweist, in denen die ebenen, in Anpressrichtung verlaufenden Führungsflächen (12) der Klemmstücke (11) verlaufen.

22. Anordnung nach Anspruch 21, wobei die Klemmstücke (11) derartig ausgebildet sind, dass sie in zwei verschiedenen Positionen eingebaut werden können, zur wahlweisen Positionierung der Kontaktflächen (9) der Befestigungsfortsätze (5) des Stators (3) in zwei verschiedenen Positionen an den Kontaktflächen (10) der Begrenzungen der Befestigungsaufnahmeöffnungen (8).

23. Anordnung nach einem der Ansprüche 13 bis 22, wobei die Befestigungsfortsätze (5) des Stators (3) in Richtung der Rotationsachse (R) der Elektrodenrolle (4) gesehen jeweils einen kreisrunden Querschnitt mit einer Abplattung aufweisen, welche die Kontaktfläche (9) bildet.

24. Anordnung nach einem der Ansprüche 13 bis 23, wobei die Klemmstücke (11) mittels in dem Schweissarm (2) befestigter Spannschrauben (14) gegen die Befestigungsfortsätze (5) des Stators (3) gepresst sind, zum Anpressen der daran gebildeten Kontaktflächen (9) an die zugeordneten Kontaktflächen (10) der Begrenzungen der Befestigungsaufnahmeöffnungen (8).

25. Anordnung nach einem der Ansprüche 11 bis 24, wobei in den Kontaktflächen (10) der Befestigungsaufnahmeöffnungen (8) Dichtungen (24) angeordnete sind, zur Abdichtung der sich zumindest teilweise überschneidenden Zu- bzw. Abführöffnungen (15, 16) nach aussen hin.

26. Anordnung nach einem der Ansprüche 13 bis 25, wobei eine der beiden sich gegenüberliegenden Begrenzungswände (7) der Aufnahmeöffnung (6) für den Rollenkopf (1), welche Begrenzungswände (7) die Befestigungsaufnahmeöffnungen (8) für die Befestigungsfortsätze (5) des Stators (3) des Rollenkopfes (1) bilden, von einem Bauteil (17) gebildet ist, welches zwecks Montage oder Austausch des Rollenkopfes (1) von einem Hauptkörper (18) des Schweissarms (2), welcher die andere der beiden sich gegenüberliegenden Begrenzungswände (7) der Aufnahmeöffnung (6) für den Rollenkopf (1) bildet, vorübergehend entfernt werden kann.

27. Widerstandsnahtschweissmachine mit einer Anordnung nach einem der Ansprüche 11-26.

28. Verwendung der Anordnung nach einem der Ansprüche 11-26 zum Widerstandsnahtschweissen der Längsnaht von Dosenzargen.

## Claims

1. Method for fastening a roller head (1) to a welding arm (2) for a resistance seam welding machine, wherein the roller head (1) has a stator (3) and an electrode roller (4) which is supported as a rotor on the stator in a rotatable way about a rotation axis (R), and wherein the stator (3) protrudes over the electrode roller (4) with fastening extensions (5) on both sides of the electrode roller (4) in the direction of the rotation axis (R), comprising the steps:
a) providing a welding arm (2) for a resistance seam welding machine comprising a reception opening (6) for the roller head (1), which is formed between two, particularly parallel, limiting walls (7) facing each other, which themselves have fastening reception openings (8) for the fastening extensions (5) of the stator (3) of the roller head (1);
b) arranging the roller head (1) in the reception opening (6) for the roller head in such a way that the electrode roller (4) protrudes outside the reception opening (6) with a part of its circumferential boundary and the fastening extensions (5) are arranged inside the fastening reception openings (8);
**characterized by**
c) fastening the roller head (1) to the welding arm (2) by pressing each of the fastening extensions (5) of the stator (3) with an even contact surface (9) formed thereon to an attributed even contact surface (10, 19) inside the boundaries of the respective fastening reception opening (8),
wherein the contact surfaces (9) of the fastening extensions (5) of the stator (3) and the attributed even contact surfaces (10) have supply and discharge openings (15, 16) for a cooling medium and the fastening extensions (5) of the stator (3) are arranged and fastened in the fastening reception openings (8) for the fastening extensions (5) in such a way that each of the supply and discharge openings (15, 16) overlap at least partially,
and wherein each of the fastening extensions (5) of the stator (3) is pressed with a clamping piece (11) received in the respective fastening reception opening (8) with its contact surfaces (9) against the attributed contact surfaces (10, 19).

2. Method according to claim 1, wherein the attributed contact surface (19) is provided by an adapter arrangement (20, 21) arranged inside the respective fastening reception opening (8), which itself is pressed with a contact surface (19) formed thereon on an attributed contact surface (10) formed by the boundaries of the respective fastening reception opening (8).

3. Method according to claim 1, wherein each attributed contact surface (10) is provided by the boundaries of the respective fastening reception opening (8).

4. Method according to claim 3, wherein the contact surfaces (9) at the fastening extensions (5) of the stator (3) and the attributed contact surfaces (10, 19) extend in planes, which are parallel to the rotation axis (R) of the electrode roller (4), and particularly perpendicular to a longitudinal axis (L) of the welding arm (2).

5. Method according to one of the claims 3 to 4, wherein the clamping pieces (11) are guided through the boundaries of the fastening reception openings (8) for an ability to shift in clamping direction.

6. Method according to claim 5, wherein, for guidance, the clamping pieces (11) adjoin, for an ability to shift in clamping direction, attributed guiding surfaces (13) of the boundaries of the fastening reception openings (8) by means of even guiding surfaces (12) extending in pressing direction.

7. Method according to one of the claims 3 to 6, wherein the fastening extensions (5) of the stator (3) and the fastening reception opening (8) are adapted in such a way that the fastening extensions (5) can be pressed with their contact surfaces (9) in different positions on the contact surfaces (10) of the boundaries of the fastening reception openings (8).

8. Method according to claim 7, wherein the positions are set by means of the clamping pieces (11) in such a way that during pressing of the fastening extensions (5) the latter establish a positive fit with the boundaries of the respective fastening reception openings (8) in a direction parallel to the plane of the contact surfaces (9, 10) and perpendicular to the rotation axis (R) of the electrode roller (4) as well as a positive fit with the respective fastening extension (5) in a direction parallel to the planes of the contact surfaces (9, 10) and perpendicular to the rotation axis (R) of the electrode roller (4).

9. Method according to one of the claims 3 to 8, wherein the clamping pieces (11) are pressed against the fastening extensions (5) of the stator (3) by means of clamping screws (14) fastened in the welding arm (2) for pressing the fastening extensions (5) with the contact surfaces (9) formed thereon on the attributed contact surfaces (10, 19).

10. Method according to one of the preceding claims, wherein one of the limiting walls (7) facing each other of the reception opening (6) for the roller head (1), which limiting walls (7) form the fastening reception openings (8) for the fastening extensions (5) of the stator (3) of the roller head (1), is formed by a component (17) which can be temporarily removed from a main body (18) of the welding arm (2), which forms the other one of the two limiting walls (7) of the reception opening (6) for the roller head (1), particularly showing away in the direction of the rotation axis (R) of the electrode roller (4),
and wherein this component (17) is removed temporarily for arranging the roller head (1) in the reception opening (6) and is reinstalled after inserting the roller head (1) into the main body (18) in such a way that one of the fastening extensions (5) of the stator (3) of the roller head (1) is arranged inside the fastening reception opening (8) which is formed by the side wall (7) of the main body (18), in such a way that the other fastening extension (5) of the stator (3) is arranged inside the fastening reception opening (8) which is formed by the side wall (7) of the component (17).

11. Arrangement comprising a welding arm (2) for a resistance seam welding machine and a roller head (1) fastened thereon,
wherein the roller head (1) has a stator (3) and an electrode roller (4) which is supported as a rotor on the stator (3) in a rotatable way about a rotation axis (R), and wherein the stator (3) protrudes over the electrode roller (4) with fastening extensions (5) on both sides of the electrode roller (4) in the direction of the rotation axis (R),
wherein the welding arm (2) has a reception opening (6) for the roller head (1), which is formed between two, particularly parallel, limiting walls (7) facing each other, which themselves have fastening reception openings (8) for the fastening extensions (5) of the stator (3) of the roller head (1),
wherein the roller head (1) is arranged inside the reception opening (6) in such a way that the electrode roller (4) protrudes outside the reception opening (6) with a part of its circumferential boundary and the fastening extensions (5) are arranged inside the fastening reception openings (8),
**characterized in that**
the roller head (1) is fastened to the welding arm (2) by pressing each of the fastening extensions (5) of the stator (3) with an even contact surface (9) formed thereon to a attributed even contact surface (10, 19) inside the boundaries of the respective fastening reception opening (8),
wherein the contact surfaces (9) of the fastening extensions (5) of the stator (3) and the attributed even contact surfaces (10) have supply and discharge openings (15, 16) for a cooling medium and the fastening extensions (5) of the stator (3) are arranged and fastened in the fastening reception openings (8) in such a way that each of the supply and discharge openings (15, 16) overlap at least partially,
and wherein each of the fastening extensions (5) of the stator (3) is pressed with a clamping piece (11) received in the respective fastening reception opening (8) with its contact surfaces (9) against the attributed contact surfaces (10, 19).

12. Arrangement according to claim 11,
wherein the attributed contact surface (19) in each case is provided by an adapter arrangement (20) arranged inside the respective fastening reception opening (8), which itself is pressed with a contact surface (21) formed thereon on an attributed contact surface (10) formed by the boundaries of the respective fastening reception opening (8).

13. Arrangement according to claim 11,
wherein each attributed contact surface (10) is provided by the boundaries of the respective fastening reception opening (8).

14. Arrangement according to claim 13,
wherein the contact surfaces (9) at the fastening extensions (5) of the stator (3) and the attributed contact surfaces (10, 19) extend in planes, which are parallel to the rotation axis (R) of the electrode roller (4), and particularly perpendicular to a longitudinal axis (L) of the welding arm (2).

15. Arrangement according to one of the claims 13 to 14, wherein the fastening reception openings (8) are circumferentially closed.

16. Arrangement according to claims 15,
wherein the clamping pieces (11) are guided through the boundaries of the fastening reception opening (8) for an ability to shift in clamping direction.

17. Arrangement according to claim 16, wherein, for guidance, the clamping pieces (11) adjoin, for an ability to shift in clamping direction, attributed guiding surfaces (13) of the boundaries of the fastening reception opening (8) by means of even guiding surfaces (12) extending in pressing direction.

18. Arrangement according to one of the claims 13 to 17, wherein each clamping piece (11) engages a fastening extension (5) of the stator (3) from the side opposed to the contact surface (9).

19. Arrangement according to one of the claims 13 to 18, wherein the fastening extensions (5) of the stator (3) and the fastening reception opening (8) are adapted in such a way that the fastening extensions (5) can be pressed with their contact surfaces (9) in different positions on the contact surfaces (10) of the boundaries of the fastening reception opening (8).

20. Arrangement according to claim 19,
wherein the positions are set by means of the clamping pieces (11) in such a way that during pressing of the fastening extensions (5) the latter establish a positive fit with the boundaries of the respective fastening reception opening (8) in a direction parallel to the plane of the contact surfaces (9, 10) and perpendicular to the rotation axis (R) of the electrode roller (4) as well as a positive fit with the respective fastening extension (5) in a direction parallel to the planes of the contact surfaces (9, 10) and perpendicular to the rotation axis (R) of the electrode roller (4).

21. Arrangement according to claim 18 and claim 20, wherein the rotation axis (R) of the electrode roller (4) has different distances to the planes in which the even guiding surfaces (12) extending in pressing direction of the clamping pieces (11) run.

22. Arrangement according to claim 21,
wherein the clamping pieces (11) are formed in such a way that they can be mounted in two different positions for the optional positioning of the contact surfaces (9) of the fastening extensions (5) of the stator (3) in two different positions on the contact surfaces (10) of the boundaries of the fastening reception openings (8).

23. Arrangement according to one of the claims 13 to 22, wherein each one of the fastening extensions (5) of the stator (3) has a circular cross section with a flattening forming the contact surface (9), as seen in the direction of the rotation axis (R) of the electrode roller (4).

24. Arrangement according to one of the claims 13 to 23, wherein the clamping pieces (11) are pressed against the fastening extensions (5) of the stator (3) by means of clamping screws (14) fastened in the welding arm (2) for pressing the contact surfaces (9) formed thereon on the attributed contact surfaces (10) of the boundaries of the fastening reception openings (8).

25. Arrangement according to one of the claims 11 to 24, wherein seals (24) for sealing the at least partially overlapping supply and discharge openings (15, 16) towards the exterior are arranged in the contact surfaces (10) of the fastening reception openings (8).

26. Arrangement according to one of the claims 13 to 25, wherein one of the two limiting walls (7) facing each other of the reception opening (6) for the roller head (1), which limiting walls (7) form the fastening reception openings (8) for the fastening extensions (5) of the stator (3) of the roller head (1), is formed, for the purpose of mounting or removing the roller head (11), by a component (17) which can be temporarily removed from a main body (18) of the welding arm (2), which forms the other one of the two limiting walls (7) of the reception opening (6) for the roller head (1).

27. Resistance seam welding machine with an arrangement according to one of the claims 11 to 26.

28. Use of the arrangement according to one of the claims 11 to 26 for resistance seam welding of the longitudinal seam of container bodies.

## Revendications

1. Procédé de fixation d'une tête de rouleau (1) à un bras de soudage (2) pour une machine de soudage par résistance, dans lequel la tête de rouleau (1) a un stator (3) et un rouleau d'électrode (4) qui est supporté comme un rotor sur le stator de manière rotative autour d'un axe de rotation (R), et dans lequel le stator (3) fait saillie sur le rouleau d'électrode (4) avec des extensions de fixation (5) sur les deux côtés du rouleau d'électrode (4) dans la direction de l'axe de rotation (R), comprenant les étapes suivantes:
a) fournir un bras de soudage (2) pour une machine à souder par résistance comprenant une ouverture de réception (6) pour la tête de rouleau (1), qui est formée entre deux parois de limitation (7) agencées vis-à-vis, particulièrement parallèles, qui présentent elles-mêmes des ouvertures de réception de fixation (8) pour les extensions de fixation (5) du stator (3) de la tête de rouleau (1) ;
b) disposer la tête de rouleau (1) dans l'ouverture de réception (6) pour la tête de rouleau de telle sorte que le rouleau d'électrode (4) fait saille de l'ouverture de réception (6) avec une partie de son bord circonférentiel et que les extensions de fixation (5) soient disposées à l'intérieur des ouvertures de réception de fixation (8) ;
**caractérisé par**
c) fixer la tête du rouleau (1) au bras de soudage (2) en pressant chacune des extensions de fixation (5) du stator (3) avec une surface de contact plane (9) formée sur celle-ci contre une surface de contact plane attribuée (10, 19) à l'intérieur des bords de l'ouverture de réception de fixation respective (8),
dans lequel les surfaces de contact (9) des extensions de fixation (5) du stator (3) et les surfaces de contact paires attribuées (10) ont des ouvertures d'alimentation et d'évacuation (15, 16) pour un fluide de refroidissement et les extensions de fixation (5) du stator (3) sont disposées et fixées dans les ouvertures de réception de fixation (8) pour les extensions de fixation (5) de manière à ce que chacune des ouvertures d'alimentation et d'évacuation (15, 16) se chevauchent au moins en partie,
et dans lequel chacune des extensions de fixation (5) du stator (3) est pressée avec une pièce de serrage (11) reçue dans l'ouverture de réception de fixation respective (8) avec ses surfaces de contact (9) contre les surfaces de contact attribuées (10, 19).

2. Procédé selon la revendication 1, dans lequel la surface de contact attribuée (19) est fournie par un adaptateur (20, 21) disposé à l'intérieur de l'ouverture de réception de fixation respective (8), qui est lui-même pressé avec une surface de contact (19) formée sur une surface de contact attribuée (10) formée par les bords de l'ouverture de réception de fixation respective (8).

3. Procédé selon la revendication 1, dans lequel chaque surface de contact attribuée (10) est fournie par les bords de l'ouverture de réception de fixation respective (8).

4. Procédé selon la revendication 3, dans lequel les surfaces de contact (9) au niveau des extensions de fixation (5) du stator (3) et les surfaces de contact attribuées (10, 19) s'étendent dans des plans parallèles à l'axe de rotation (R) du rouleau d'électrode (4), et en particulier perpendiculaires à un axe longitudinal (L) du bras de soudage (2).

5. Procédé selon l'une des revendications 3 à 4, dans lequel les pièces de serrage (11) sont guidées à travers les bords des ouvertures de réception de la fixation (8) pour un déplacement dans la direction de serrage.

6. Procédé selon la revendication 5, dans lequel, pour le guidage pour un déplacement dans le sens de serrage, les pièces de serrage (11) jouxtent les surfaces de guidage (13) attribuées aux bords des ouvertures de réception de la fixation (8) au moyen de surfaces de guidage planes (12) s'étendant dans le sens de la pression.

7. Procédé selon l'une des revendications 3 à 6, dans lequel les extensions de fixation (5) du stator (3) et l'ouverture de réception de fixation (8) sont adaptées de manière à ce que les extensions de fixation (5) puissent être pressées avec leurs surfaces de contact (9) dans différentes positions sur les surfaces de contact (10) des bords des ouvertures de réception de fixation (8).

8. Procédé selon la revendication 7, dans lequel les positions sont réglées au moyen des pièces de serrage (11) de manière à ce que, lors de la pression des extensions de fixation (5), ces dernières font un engagement positive aux bords des ouvertures de réception de fixation respectives (8) dans une direction parallèle au plan des surfaces de contact (9, 10) et perpendiculairement à l'axe de rotation (R) du rouleau d'électrode (4), ainsi qu'un engagement positif avec l'extension de fixation respective (5) dans une direction parallèle aux plans des surfaces de contact (9, 10) et perpendiculaire à l'axe de rotation (R) du rouleau d'électrode (4).

9. Procédé selon l'une des revendications 3 à 8, dans lequel les pièces de serrage (11) sont pressées contre les extensions de fixation (5) du stator (3) au moyen de vis de serrage (14) fixées dans le bras de soudage (2) pour presser les extensions de fixation (5) avec les surfaces de contact (9) formées sur les surfaces de contact attribuées (10, 19).

10. Procédé selon l'une des revendications précédentes, dans lequel l'une des parois de limitation (7) en regard de l'ouverture de réception (6) pour la tête de rouleau (1), lesquelles parois de limitation (7) forment les ouvertures de réception de fixation (8) pour les extensions de fixation (5) du stator (3) de la tête de rouleau (1), est formé par un composant (17) qui peut être temporairement retiré d'un corps principal (18) du bras de soudage (2), qui forme l'autre des deux parois de limitation (7) de l'ouverture de réception (6) pour la tête de rouleau (1), particulièrement visible dans la direction de l'axe de rotation (R) du rouleau d'électrode (4),
et dans lequel ce composant (17) est retiré temporairement pour arranger la tête de rouleau (1) dans l'ouverture de réception (6) et est réinstallé après avoir inséré la tête de rouleau (1) dans le corps principal (18) de telle sorte qu'une des extensions de fixation (5) du stator (3) de la tête de rouleau (1) soit arrangée à l'intérieur de l'ouverture de réception de fixation (8) qui est formée par la paroi latérale (7) du corps principal (18), de telle sorte que l'autre extension de fixation (5) du stator (3) soit disposée à l'intérieur de l'ouverture de réception de fixation (8) formée par la paroi latérale (7) du composant (17).

11. Agencement comprenant un bras de soudage (2) pour une machine à souder par résistance et une tête de rouleau (1) fixée sur ce bras,
dans lequel la tête de rouleau (1) comporte un stator (3) et un rouleau d'électrode (4) qui est supporté comme un rotor sur le stator (3) de manière rotative autour d'un axe de rotation (R), et dans lequel le stator (3) fait saillie sur le rouleau d'électrode (4) avec des extensions de fixation (5) des deux côtés du rouleau d'électrode (4) dans la direction de l'axe de rotation (R),
dans lequel le bras de soudage (2) présente une ouverture de réception (6) pour la tête de rouleau (1), qui est formée entre deux parois de limitation (7), particulièrement parallèles, se faisant face, qui présentent elles-mêmes des ouvertures de réception de fixation (8) pour les extensions de fixation (5) du stator (3) de la tête de rouleau (1),
dans lequel la tête de rouleau (1) est disposée à l'intérieur de l'ouverture de réception (6) de telle sorte que le rouleau d'électrode (4) dépasse de l'ouverture de réception (6) sur une partie de sa circonférence et que les extensions de fixation (5) sont disposées à l'intérieur des ouvertures de réception de fixation (8),
**caractérisé par le fait que**
la tête de rouleau (1) est fixée au bras de soudage (2) en appuyant chacune des extensions de fixation (5) du stator (3) avec une surface de contact plane (9) formée sur celle-ci contre une surface de contact plane attribuée (10, 19) à l'intérieur des bords de l'ouverture de réception de fixation respective (8),
dans lequel les surfaces de contact (9) des extensions de fixation (5) du stator (3) et les surfaces de contact attribuées (10) ont des ouvertures d'alimentation et d'évacuation (15, 16) pour un fluide de refroidissement et les extensions de fixation (5) du stator (3) sont disposées et fixées dans les ouvertures de réception de fixation (8) de manière à ce que chacune des ouvertures d'alimentation et d'évacuation (15, 16) se chevauchent au moins partiellement,
et dans lequel chacune des extensions de fixation (5) du stator (3) est pressée avec une pièce de serrage (11) reçue dans l'ouverture de réception de fixation respective (8) avec ses surfaces de contact (9) contre les surfaces de contact attribuées (10, 19).

12. Agencement selon la revendication 11, dans lequel la surface de contact attribuée (19) est fournie dans chaque cas par un adaptateur (20) disposé à l'intérieur de l'ouverture de réception de fixation respective (8), qui est lui-même pressé avec une surface de contact (21) formée sur une surface de contact attribuée (10) formée par les bords de l'ouverture de réception de fixation respective (8).

13. Agencement selon la revendication 11, dans lequel chaque surface de contact attribuée (10) est fournie par les bords de l'ouverture de réception de fixation respective (8).

14. Agencement selon la revendication 13, dans lequel les surfaces de contact (9) au niveau des extensions de fixation (5) du stator (3) et les surfaces de contact attribuées (10, 19) s'étendent dans des plans parallèles à l'axe de rotation (R) du rouleau d'électrode (4), et en particulier perpendiculaires à un axe longitudinal (L) du bras de soudage (2).

15. Agencement selon l'une des revendications 13 à 14, dans lequel les ouvertures de réception de la fixation (8) sont fermées sur le pourtour.

16. Agencement selon la revendication 15, dans lequel les pièces de serrage (11) sont guidées à travers les bords de l'ouverture de réception de la fixation (8) pour un déplacement dans la direction de serrage.

17. Agencement selon la revendication 16, dans lequel, pour le guidage pour un déplacement dans la direction de serrage les pièces de serrage (11) jouxtent les surfaces de guidage (13) attribuées aux bords de l'ouverture de réception de la fixation (8) au moyen de surfaces de guidage (12) s'étendant dans le sens de la pression.

18. Agencement selon l'une des revendications 13 à 17, dans lequel chaque pièce de serrage (11) engage une extension de fixation (5) du stator (3) du côté opposé à la surface de contact (9).

19. Agencement selon l'une des revendications 13 à 18, dans lequel les extensions de fixation (5) du stator (3) et l'ouverture de réception de fixation (8) sont adaptées de manière à ce que les extensions de fixation (5) puissent être pressées avec leurs surfaces de contact (9) dans différentes positions sur les surfaces de contact (10) des bords de l'ouverture de réception de fixation (8).

20. Agencement selon la revendication 19, dans lequel les positions sont réglées au moyen des pièces de serrage (11) de manière à ce que, lors du pressage des extensions de fixation (5), ces dernières font un engagement positive aux bords de l'ouverture de réception de fixation respective (8) dans une direction parallèle au plan des surfaces de contact (9, 10) et perpendiculaire à l'axe de rotation (R) du rouleau d'électrode (4), ainsi qu'un engagement positif avec l'extension de fixation respective (5) dans une direction parallèle aux plans des surfaces de contact (9, 10) et perpendiculaire à l'axe de rotation (R) du rouleau d'électrode (4).

21. Agencement selon la revendication 18 et la revendication 20, dans lequel l'axe de rotation (R) du rouleau d'électrode (4) présente des distances différentes par rapport aux plans dans lesquels s'étendent les surfaces de guidage planes (12) s'étendant dans la direction de pressage des pièces de serrage (11).

22. Agencement selon la revendication 21, dans lequel les pièces de serrage (11) sont formées de telle sorte qu'elles peuvent être montées dans deux positions différentes pour le positionnement optionnel des surfaces de contact (9) des extensions de fixation (5) du stator (3) dans deux positions différentes sur les surfaces de contact (10) des bords des ouvertures de réception de fixation (8).

23. Agencement selon l'une des revendications 13 à 22, dans lequel chacune des extensions de fixation (5) du stator (3) présente une section transversale circulaire avec un aplatissement formant la surface de contact (9), vue dans la direction de l'axe de rotation (R) du rouleau d'électrode (4).

24. Agencement selon l'une des revendications 13 à 23, dans lequel les pièces de serrage (11) sont pressées contre les extensions de fixation (5) du stator (3) au moyen de vis de serrage (14) fixées dans le bras de soudage (2) pour presser les surfaces de contact (9) formées sur celles-ci sur les surfaces de contact attribuées (10) des bords des ouvertures de réception de la fixation (8).

25. Agencement selon l'une des revendications 11 à 24, dans lequel des joints d'étanchéité (24) vers l'extérieur des ouvertures d'alimentation et d'évacuation (15, 16) qui se chevauchent au moins partiellement sont disposés dans les surfaces de contact (10) des ouvertures de réception de la fixation (8).

26. Agencement selon l'une des revendications 13 à 25, dans lequel l'une des deux parois de limitation (7) se faisant face de l'ouverture de réception (6) de la tête de rouleau (1), lesquelles parois de limitation (7) forment les ouvertures de réception de fixation (8) pour les extensions de fixation (5) du stator (3) de la tête de rouleau (1), est formée, pour le montage ou le démontage de la tête de rouleau (11), par un composant (17) qui peut être temporairement retiré d'un corps principal (18) du bras de soudage (2), qui forme l'autre des deux parois de limitation (7) de l'ouverture de réception (6) pour la tête de rouleau (1).

27. Machine à souder par résistance avec un Agencement selon l'une des revendications 11 à 26.

28. Utilisation de l'agencement selon l'une des revendications 11 à 26 pour le soudage par résistance du joint longitudinal des corps de récipients.
